# FASCICULE DE BREVET EUROPEEN

(11) **EP 0 539 452 B1**
(45) Date de publication et mention de la délivrance du brevet: **18.01.1995**
(21) Numéro de dépôt: 91913250.6
(22) Date de dépôt: 12.07.1991
(51) Int. Cl.: A47G 19/02, A47J 47/14, A47J 27/12

(54) **ASSIETTE COMPOSITE POUR ALIMENTS PREALABLEMENT PREPARES**
TELLER AUS VERBUNDWERKSTOFF FÜR VORHER ZUBEREITETE NAHRUNGSMITTEL
COMPOSITE DISH FOR PREVIOUSLY PREPARED FOOD

(30) Priorité: 17.07.1990 FR 9009117
(43) Date de publication de la demande: 05.05.1993
(73) Titulaire: BOSSU, Jean-Marie, F-75001 Paris (FR); BOSSU, Annie, F-75001 Paris (FR)
(72) Inventeur: BOSSU, Jean-Marie, F-75001 Paris (FR); BOSSU, Annie, F-75001 Paris (FR)
(74) Mandataire: Benech, Frédéric
(86) Numéro de dépôt international: FR9100575
(87) Numéro de publication internationale: WO9201413

(56) Documents cités:
- EP-A- 0 024 605
- CH-A- 531 871
- FR-A- 2 252 830
- GB-A- 1 308 961
- US-A- 3 760 996

## Description

La présente invention concerne des assiettes composites destinées à contenir des aliments préalablement préparés et conditionnés.

Elle trouve une application particulièrement importante, bien que non exclusive, dans le domaine des assiettes pour repas multi-portions agencées pour conserver les différents aliments d'un repas séparés les uns des autres.

De telles assiettes sont notamment utilisées dans le domaine de la restauration hospitalière.

On connait déjà des assiettes ou récipients multiportions pour repas.

Le document WO 88/09142 décrit notamment une assiette comprenant des compartiments isolés les uns des autres par des cloisons, qui permettent ainsi de séparer les différents éléments d'un plat par exemple pour repas surgelé ou pour repas servi à bord d'un avion.

Une telle assiette présente des inconvénients. La composition du repas qu'elle contient est, en effet, obligatoirement figée une fois le choix des aliments à mettre dans chaque compartiment effectué. Il s'ensuit, en général, une limitation du nombre de repas différents proposés au consommateur.

Par ailleurs, la fabrication de telles assiettes présente des difficultés dues notamment à la nécessité de remplir avec des aliments différents, simultanément ou en parallèle, les compartiments séparés ou les récipients.

Le document GB-A-1.308.961 décrit quant à lui une assiette selon le préambule de la revendication 1 et comprenant deux portions d'assiette emboîtables peu maniables et difficilement thermo-scellables.

Le document CH-A-531 871 décrit un plateau unique comprenant plusieurs compartiments pour la fixation amovible des récipients.

La présente invention permet d'éliminer les inconvénients mentionnés ci-dessus. Elle vise à fournir une assiette répondant mieux que celles antérieurement connues aux exigences de la pratique, notamment en ce qu'elle permet une grande diversité de plats composites, tout en minimisant le nombre d'éléments d'assiettes nécessaires à la composition de tels plats. Une telle assiette est de plus peu coûteuse à réaliser et facile à assembler.

Dans ce but l'invention propose une assiette composite telle que definie dans la revendication 1.

Une grande diversité de plats peut ainsi être proposée, tout en ne nécessitant qu'un nombre réduit de variété d'aliments en stock. Par exemple, avec sept recettes de viande différentes et cinq recettes de légumes, on peut composer une variété de 35 menus différents, pour seulement douze récipients d'assiettes en stock.

Dans un mode avantageux de réalisation, les récipients et l'élément rigide de support sont en matière plastique et propres à résister à une température supérieure à 180°C, pendant un temps déterminé.

Il en résulte une grande souplesse d'utilisation, autorisant notamment un réchauffage sur plaques chauffantes, en four tradidionnel, en four à micro-onde,ou au bain-marie de l'assiette, pour un coût de fabrication acceptable.

Deux demi-assiettes peuvent notamment être facilement assemblées l'une avec l'autre, pour reconstituer une assiette, un seul type d'éléments de support étant nécessaire.

Avantageusement, les éléments de support sont des collerettes rigides de support, fixables entre elles de façon rigide et amovible, chacune desdites collerettes étant agencée pour supporter un desdits récipients pour aliment.

La fixation de deux collerettes (identiques) l'une sur l'autre, assure une bonne rigidité à l'assiette après assemblage avec les récipients.

Dans un mode avantageux de réalisation, chaque collerette de support comprend des moyens de fixation amovible avec l'autre collerette, lesdits moyens de fixation comprenant une portion en forme de languette rigide, percée d'au moins une ouverture à une première extrémité et munie d'au moins un pion à l'autre extrémité, ledit pion étant propre à s'emboîter en force par pression dans une ouverture identique à 'ouverture de ladite première extrémité.

Avantageusement, les récipients sont à fond plat sans aucune aspérité. Ce type de conditionnement à fond plat permet de maintenir l'assiette au chaud par exemple sur des chariots chauffants, ou des plaques chauffantes ce qui n'est pas possible avec les assiettes classiques à produits appertisés.

Dans un mode de réalisation particulier, chaque récipient est sensiblement en forme de barquette parallélépipédique et comprend au moins deux portions de rainure latérale, parallèles au bord supérieur du récipient, chaque portion de rainure étant respectivement ménagée sur une paroi latérale opposée dudit récipient. Chaque collerette présente sensiblement une forme de croissant plat, dont les deux branches sont munies de bords internes propres à coopérer à frottement avec lesdites portions de rainure, de façon à supporter latéralement le récipient correspondant tout en évitant son glissement par rapport aux branches.

Ce type d'assiette est avantageusement utilisé pour le conditionnement de mousse foisonnée stérile, qui est un type d'aliment avantageux pour les enfants et les adultes ou vieillards ayant des difficultés mastiquatoires. Tout autre type d'aliment salé ou sucré peut, par ailleurs, et bien entendu, être envisagé; notamment l'assiette selon l'invention permet d'assembler plusieurs aliments de valeur énergétique différente, ce qui permet de subvenir aux besoins nutritionnels spécifiques de chaque consommateur, tout en respectant un régime diététique personnalisé.

L'invention sera mieux comprise à la lecture de la description qui suit de mode particulier de réalisation donné à titre d'exemple non limitatif.

La description se réfère aux dessins qui l'accompagnent, dans lesquels :
- La figure 1 est vue de dessus d'une assiette selon un premier mode de réalisation de l'invention.
- La figure 2 est une vue latérale de la figure 1.
- La figure 3 est une vue latérale d'un autre mode de réalisation d'une assiette selon l'invention.
- La figure 4 est une vue de dessus d'une collerette de l'assiette de la figure 3.
- La figure 5 est une vue en perspective d'un récipient de l'assiette de la figure 3.

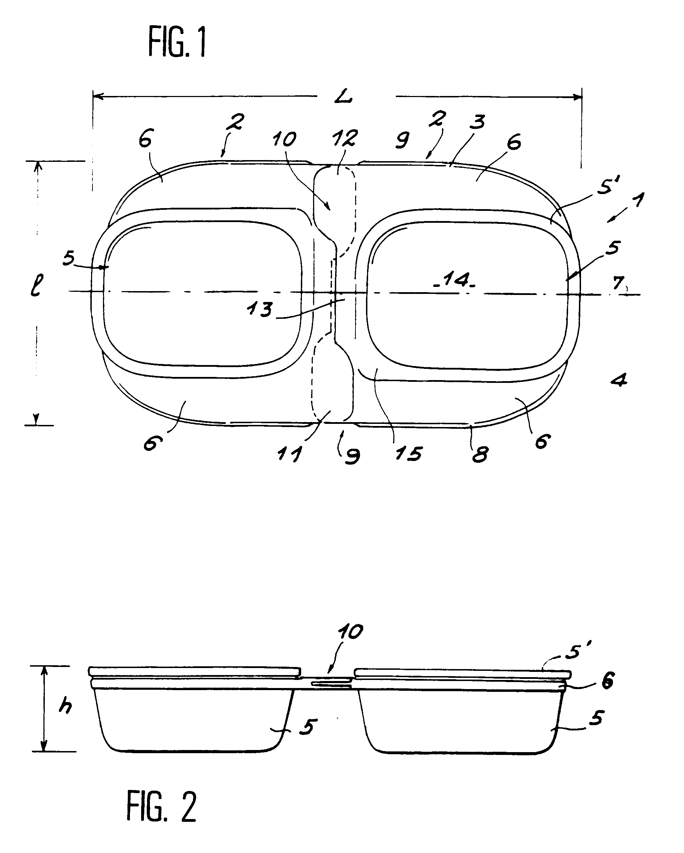

Les figures 1 et 2 montrent un premier mode de réalisation d'une assiette 1 selon l'invention. L'assiette 1 comporte deux éléments de support 2, identiques en matière plastique rigide. Chaque élément est constitué par une feuille rigide plane 3 comportant un alvéole ou évidement latéral 4. Cet alvéole constitue un logement pour le récipient 5.

Chaque élément de support 2 présente une forme générale sensiblement en pince de crabe. Il comporte d'un côté deux branches 6 symétriques par rapport à un axe longitudinal central 7, lesdites branches formant l'alvéole entre elles.

Les bords latéraux extérieurs 8 des branches 6 sont par exemple renforcés pour augmenter la rigidité de l'élément de support. Lesdites branches, sont par ailleurs avantageusement courbées du côté de leur extrémité vers l'axe central 7, afin de donner une forme généralement ovale à l'ensemble de l'assiette composite assemblée selon l'invention.

L'élément de support comporte, de l'autre côté, une partie 9 de jonction entre les branches, solidaires desdites branches.

Cette partie de jonction forme une sorte de languette rigide 10, comportant deux portions d'extrémité 11 et 12, faisant saillie en forme d'oreilles par rapport à la partie centrale 13 de languette. Les portions d'extrémité 11 et 12 sont propres à assurer la fixation amovible avec un élément de support identique adjacent.

Dans le premier mode de réalisation représenté sur les figures 1 et 2, la portion d'extrémité 11 présente un évidement parallélépipédique mince, ouvert vers l'extérieur de la collerette et pratiqué dans la tranche du bord de la languette. L'autre portion d'extrémité 12 présente une forme complémentaire constituée par une lamelle propre à glisser en force à l'intérieur de l' évidement de l'élément de support adjacent.

Un seul type d'élément de support est nécessaire. Il suffit en effet de retourner un élément pour le faire coopérer avec un élément identique, sur lequel il vient se fixer.

L'élément de support est par exemple en polytéréphtalate d'éthylène glycol connu sous les dénominations abrégées "PET" ou "PETG". Le matériau est très résistant mécaniquement, imperméalable à l'eau et peut supporter une température de 180°C, voire une température allant jusqu'à 220 ou 230°C, après un traitement spécifique connu de cristallisation.

L'assiette, selon le mode de réalisation de l'invention décrit ici, comporte deux récipients 5 en forme de barquettes sensiblement parallélépipédiques. Ces barquettes comportent un bord supérieur 5' et un couvercle 14 thermo-scellable pelable, de façon connue en soi.

Les barquettes sont par exemple en matière plastique du type copolymère d'éthylène et d'alcool vinylique, imperméable à l'oxygène et aux substances odorantes volatiles. Chaque barquette est introduite dans l'évidement 4 d'un élément de support correspondant, par exemple par le dessus. Les parois de la barquette coopèrent à frottement doux avec les bords internes des branches 6 qui constituent ladite alvéole. L'élément 2 retient verticalement le récipient lorsque l'assiette est en position horizontale, par l'intermédiaire du bord supérieur 5' qui s'étend vers l'extérieur, sensiblement perpendiculairement aux parois latérales de la barquette, pour reposer sur les bords internes desdites branches 6.

Avantageusement le bord 5' comporte une oreille ou saillie 15, à un coin, afin de permettre d'attraper plus facilement le couvercle 14 par une de ses extrémités pour ouvrir le récipient par le pelage dudit couvercle 14. Celui-ci est fixé par thermoscellage sur le rebord 5' de la barquette de façon connue en soi.

A titre d'exemple non limitatif, les dimensions d'une barquette selon le mode de réalisation qui vient d'être décrit peuvent être :
- hauteur comprise entre 25 et 112 mm,
- largeur comprise entre 80 et 85 mm,
- longueur de l'ordre de 115 mm ;
avec une capacité de barquette ainsi comprise entre 100 et 450 ml.

Les dimensions hors tout de l'assiette correspondante peuvent alors être :
H (hauteur) comprise entre 25 et 115 mm
l (largeur) de l'ordre de 130 mm
L (longueur) de l'ordre de 250 mm.

Le couvercle thermo-scellé est avantageusement en un matériau permettant de chauffer les barquettes par micro-onde. C'est, par exemple, un operculage du type conçu et réalisé par la Sté Alsacienne d'Aluminium et connu sous la marque STERIL UP.

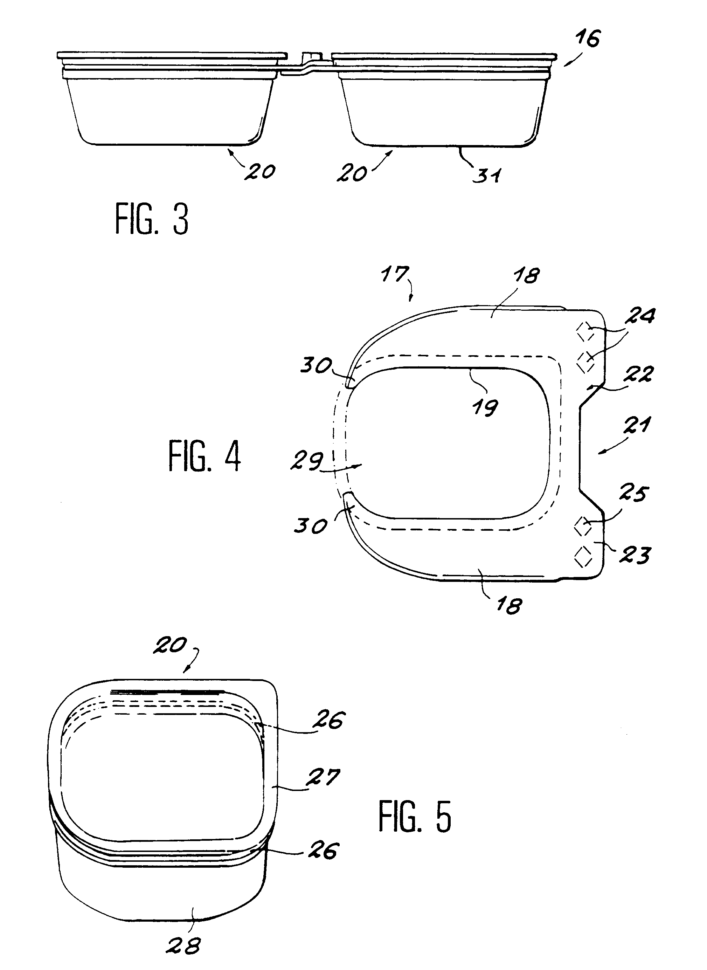

Sur les figures 3, 4 et 5 on a représenté un second mode de réalisation d'une assiette 16 selon l'invention.

L'élément de support est constitué par une collerette 17 en forme de pince de crabe, munie de deux extrémités 18 ou branches. Ces branches sont munies de bords internes 19 propres à coopérer avec les récipients pour aliment 20, comme on va le voir. La collerette 17 comporte une partie médiane 21 de jonction en forme de languette à oreilles, c'est-à-dire présentant des portions d'extrémité latérales 22 et 23 s'étendant dans le plan de la collerette vers l'extérieur par rapport à la partie centrale de ladite partie médiane 21. La portion 22 est munie de deux pions 24 de fixation, l'autre portion 23 comportant deux ouvertures 25 de forme identique aux pions, et propres à s'emboîter en force par pression dans les ouvertures d'une collerette adjacente. Les pions et ouvertures peuvent être, par exemple, de forme cylindrique, ou cubique comme représentés sur les figures 3, 4 et 5.

Le récipient 20 comporte une rainure périphérique 26 pratiquée dans la paroi externe dudit récipient à proximité du bord supérieur 27 de ce dernier, par exemple à quelques mm. Cette rainure 26 est agencée pour coopérer avec frottement, avec les bords internes 19 des branches 18 de la collerette, ce qui permet la fixation des récipients sur lesdites collerettes.

La figure 3 montre les deux éléments de support ou collerettes fixés par emboîtement des pions de l'un dans les orifices de l'autre et inversement, pour former un support d'assiette rigide auquel les deux récipients sont fixés. Pour fixer une barquette sur une collerette, on vrille légèrement l'une des branches de la collerette, de façon à permettre l'introduction en force du corps 28 de la barquette dans l'évidement 29, entre les branches 18. Le verrouillage du récipient sur la collerette se fait lorsque les bords 19 des branches s'encastrent dans la rainure 28.
On peut aussi prévoir des extrémités 30 de branches, non courbées vers l'intérieur de l'évidement, et une introduction en force sur le coté, par glissement de la rainure de la barquette sur les bords 19. Le fond 31 de la barquette est avantageusement plat.

Comme il va de soi, et comme il résulte d'ailleurs de ce qui précède, la présente invention ne se limite pas aux modes de réalisation plus particulièrement décrits. Elle en concerne au contraire toutes les variantes, et notamment celles où les éléments de support ne se sont pas en forme de pinces de crabes.

## Revendications

1. Assiette composite (1,16), comprenant au moins deux éléments (2,17) rigides de support de récipient pour aliment fixables entre eux de façon rigide et amovible, et au moins deux récipients (5,20) pour aliment respectivement associés à chacun de ces éléments, caractérisée en ce que les récipients sont recouverts de couvercles (14) thermo-scellables pelables, et sont propres à être fixés de façon amovible sur l'élément de support correspondant.

2. Assiette selon la revendication 1, caractérisée en ce que les éléments de support sont des collerettes, chacune desdites collerettes étant agencée pour supporter un desdits récipients pour aliment.

3. Assiette selon la revendication 2, caractérisée en ce que chaque collerette de support comprend des moyens (9,21) de fixation amovible avec l'autre collerette, lesdits moyens de fixation comprenant une languette rigide percée d'au moins une ouverture (25) à une première extrémité (23) et munie d'au moins un pion (24) à l'autre extrémité (22), ledit pion étant propre à s'emboîter en force par pression dans une ouverture identique à l'ouverture de ladite première extrémité.

4. Assiette selon l'une quelconque des revendications précédentes, caractérisée en ce que les récipients et les éléments rigides de support sont en matière plastique propre à résister à une température supérieure à 180°C, pendant un temps déterminé.

5. Assiette selon l'une quelconque des revendications précédentes, caractérisée en ce que les récipients sont à fond plat (31), sans aucune aspérité.

6. Assiette selon l'une quelconque des revendications précédentes, caractérisée en ce que chaque récipient (5,20) est sensiblement en forme de barquette paralléllépipédique et comprend au moins deux portions de rainure (26) latérales, parallèles au bord supérieur dudit récipient, chaque portion de rainure étant respectivement ménagée sur une paroi latérale opposée dudit récipient, et en ce que chaque collerette présente sensiblement une forme de croissant plat dont les deux branches (18) sont respectivement munies de bords internes (19) propres à coopérer avec frottement avec lesdites portions de rainure, de façon à supporter latéralement le récipient correspondant, en évitant son glissement par rapport auxdites branches.

7. Application de l'assiette selon l'une quelconque des revendications précédentes au conditionnement de mousses foisonnées stériles.

## Claims

1. Composite bowl (1,16), comprising at least two rigid supporting elements (2,17) for food containers mutually fixable in a rigid and detachable way, and at least two food containers (5,20) associated respectively with each of these elements, characterized in that the containers are covered with thermo-sealable peel-off lids (14), and are adapted to be fixed in a detachable way on the corresponding supporting element.

2. Bowl according to claim 1, characterized in that the supporting elements are flanges, each of the said flanges being designed to support one of the said food containers.

3. Bowl according to claim 2, characterized in that each supporting flange comprises means of fixation (9,21) which are detachable from the other flange, the said means of fixation being composed of a rigid tongue perforated with at least one opening (25) at one extremity (23), and provided with at least one piece (24) at the other extremity (22), the said piece being adapted to fit firmly under pressure into an opening identical to the opening in the said first extremity.

4. Bowl according to any one of the preceding claims, characterized in that the containers and the rigid supporting elements are made of plastic material adapted to withstand a temperature higher than 180°C, for a specific time.

5. Bowl according to any one of the preceding claims, characterized in that the containers have a flat bottom, without any roughness.

6. A bowl according to any one of the preceding claims, characterized in that each container (5,20) is nearly in the form of a parallelepiped-shaped receptacle and comprises at least two portions with lateral grooving (26), parallel to the upper edge of the said container, each portion of grooving being arranged respectively on an opposite lateral wall of the said container, and so that each flange presents nearly the shape of a flat crescent whose two branches (18) are provided respectively with internal edges (19) adapted to act together through friction with the said portions of grooving, in such a way as to support the corresponding container laterally, by preventing it slipping relative to the said branches.

7. Application of the bowl according to any one of the preceding claims to the packaging of sterile expanded mousse.

## Patentansprüche

1. Zusammengesetzter Teller (1,16) mit mindestens zwei in starrer und abnehmbarer Weite miteinander befestigbaren starren Elementen (2,17) zum Halten des Nahrungsmittelsbehälters und mindestens zwei Nahrungsmittelbehältern (5,20), die jeweils mit einem dieser Elemente verbunden sind, dadurch gekennzeichnet, daß die Behälter mit wärmeisolierenden abreißbaren Deckeln (14) zugedeckt sind und geeignet sind, in abnehmbarer Weise auf dem entsprechenden Halteelement befestigt zu werden.

2. Teller nach Anspruch 1, dadurch gekennzeichnet, daß die Halteelemente Flansche sind, wobei jeder der Flansche vorgesehen ist, einen der Nahrungsmittelbehälter zu halten.

3. Teller nach Anspruch 2, dadurch gekennzeichnet, daß jeder Halteflansch eine Einrichtung (9,21) zur abnehmbaren Befestigung mit dem anderen Flansch aufweist, wobei die Befestigungseinrichtung eine starre Lasche aufweist, die an einem ersten Ende (23) mit mindestens einer Öffnung durchbohrt ist und an dem anderen Ende (22) mit mindestens einem Zapfen (24) versehen ist, wobei der Zapfen geeignet ist, sich unter Druckkraft in eine mit der Öffnung des ersten Endes identische Öffnung einzupassen.

4. Teller nach einem der vorhergehenden Ansprüche, dadurch gekennzeichnet, daß die Behälter und die starren Halteelemente aus Kunststoffmaterial sind, das geeignet ist, innerhalb einer bestimmten Zeit eine Temperatur über 180°C auszuhalten.

5. Teller nach einem der vorhergehenden Ansprüche, dadurch gekennzeichnet, daß die Behälter einen obenen Boden (31), ohne jegliche Rauhheit, haben.

6. Teller nach einem der vorhergehenden Ansprüche, dadurch gekennzeichnet, daß jeder Behälter (5,20) die Gestalt eines Schiffchens in Form eines Parallelepipeds hat und mindestens zwei zum oberen Rand des Behälters parallele, seitliche Rillenabschnitte aufweist, wobei jeder Rillenabschnitt jeweils an gegenüberliegenden Seitenwänden des Behälters angebracht ist, und dadurch, daß jeder Flansch im wesentlichen in Form eines ebenen Halbmonds gestaltet ist, dessen zwei Arme (18) jeweils mit inneren Rändern (19) versehen sind, die geeignet sind, mit Reibung mit den Rillenabschnitten auf eine Weise zusammenzuwirken, daß der entsprechende Behälter seitlich gehalten wird, wobei ein Rutschen bezüglich der Arme vermieden wird.

7. Verwendung des Tellers nach einem der vorhergehenden Ansprüche für die Verpackung von sterilisierten Schaummassen.
